# EUROPEAN PATENT APPLICATION

(11) **EP 3 447 629 A1**
(43) Date of publication of application: **27.02.2019**
(21) Application number: 17786216.6
(22) Date of filing: 21.04.2017
(51) Int. Cl.: G06F 3/12, B41J 29/393, B41J 2/01

(54) **SYSTEM AND METHOD FOR INKJET LAMINATED PRINTING CAPABLE OF EXHIBITING 3D EFFECT**

(30) Priority: 22.04.2016 KR 20160049624
(71) Applicant: Inktec Co., Ltd., Ansan-si, Gyeonggi-do 15426 (KR)
(72) Inventor: CHOI, Yeoun Jong, Gimpo-si Gyeonggi-do 10104 (KR); KIM, Nam Mi, Anyang-si Gyeonggi-do 14068 (KR); CHUNG, Kwang Choon, Yongin-si Gyeonggi-do 16820 (KR)
(74) Representative: Studio Torta S.p.A.
(86) International application number: PCT/KR2017/004307
(87) International publication number: WO 2017/183948

(57) **Abstract**

The present disclosure relates to a multilayer inkjet printing system and method capable of producing a three-dimensional (3D) effect. The multilayer inkjet printing system capable of producing a 3D effect includes: a separation data generator generating separation data by performing image ripping on an input image file; and an image output unit generating, when receiving a 3D multilayer print command causing all heads to eject ink, an output providing a 3D effect forming a stereoscopic effect by ejecting ink by all the heads, wherein the image output unit includes: a printer controller reading separation data of an image, setting a channel for each stacking layer, setting a 3D effect for a layer requiring a 3D effect, generating a 3D multilayer print command with respect to a layer for which a 3D effect is set, and transmitting the same to a printing device; and the printing device performs, when receiving the 3D multilayer print command, multilayer printing by ejecting ink by all the heads. According to the present disclosure, the stacking speed may be increased, and the visible effects may be enhanced and also the tactile senses may be stimulated through the 3D and stereoscopic outputs. Also, when conductive ink is used to output a conductive pattern, a product with a desired conductivity may be obtained by adjusting the stack thickness by changing the film thickness.

## Description

### TECHNICAL FIELD

The present disclosure relates to multilayer inkjet printing, and more particularly, to a multilayer inkjet printing system and method capable of producing a three-dimensional (3D) effect.

### BACKGROUND ART

An inkjet printer refers to a printer that performs printing by spraying ink through a head nozzle by an operation of a print head. Small inkjet printers, typically used in homes or offices, mainly use standardized white printing papers and thus use black ink K and three color inks C, M, and Y for color implementation.

However, industrial inkjet printers perform print operations on print mediums of various materials such as fabric, synthetic resin, and glass as well as paper. Also, industrial inkjet printers are widely used throughout various industrial fields because they can facilitate producing of large-sized prints. Unlike in general home inkjet printers, in industrial inkjet printers, not only inks but also various solutions such as pre/post-treatment liquid and background ink (generally white ink) are sprayed (jetted) by an inkjet method for expressing colors according to the characteristics, environments, and purposes of print mediums.

In the related art, screen process or 3D printers are used for multilayer printing capable of producing a stereoscopic effect. Conventional multilayer print could produce a printing with the same height only, and 3D printing and pad printing required a complex process. In some cases, inkjet may be used for 3D printing. However, 3D printing may take a very long time such as several hours. Also, the number of particular heads (e.g., white) has to be increased to reduce the output time thereof. Among the five senses, the visual sense receives about 70% to about 80% of information, but most of print materials stimulate the visual sense only in two-dimensional (2D). Therefore, it is necessary to produce an optimized image for providing a 3D effect.

### DESCRIPTION OF EMBODIMENTS

### TECHNICAL PROBLEM

Provided is a multilayer inkjet printing system and method capable of producing a three-dimensional (3D) effect, which may enhance the visual effects and also stimulate the tactile senses through the 3D and stereoscopic outputs, may accomplish a product with a desired conductivity by adjusting the stack thickness, and may greatly reduce the time for multilayer inkjet printing by increasing the stacking speed even without adding a head.

### SOLUTION TO PROBLEM

According to an aspect of the present disclosure, a multilayer inkjet printing method capable of producing a 3D effect through multilayer printing includes: reading separation data of an image from a raster image processor (RIP); setting a channel for each stacking layer in multilayer printing, wherein a 3D effect is set for a layer requiring a 3D effect; generating a 3D multilayer print command causing all heads to eject ink when a print target layer is set to a 3D effect and transmitting the 3D multilayer print command to a printing device; and performing, by the printing device, multilayer printing by ejecting ink by all the heads when receiving the 3D multilayer print command.

The channel may include four color channels C, M, Y, and K, three spot channels W, P, and V, and at least one virtual channel O, the spot channel may include a white channel W having a white color as a background color, a primer channel P adding a substance helping adhesion and solidification of ink, and a varnish channel V adding gloss to ink, and the virtual channel may include an overwrite channel O providing a 3D effect by forming a stereoscopic effect. When necessary, the spot channels W, P, and V may be used as a virtual channel.

The multilayer inkjet printing method may further include providing an option for setting whether to use the virtual channel O for the 3D effect or use the spot channels W, P, and V as a virtual channel and providing an option for automatically raising a position of a print head whenever each layer is stacked when the stack channel is set.

The multilayer inkjet printing method may further include: providing a user interface screen including at least an operation image management region and an output image management region; displaying at least one print target image in the operation image management region; and when an image in the operation image management region is selected and located in the output image management region, providing a user interface screen for inputting an output position and a thickness of a material to be output or setting an output position by dragging the image such that an output position of an equipment flatbed and a position on a screen coincide with each other. According to another aspect of the present disclosure, a multilayer inkjet printing system capable of producing a 3D effect includes: a separation data generator generating separation data by performing image ripping on an input image file; and an image output unit generating, when receiving a 3D multilayer print command causing all heads to eject ink, an output providing a 3D effect forming a stereoscopic effect by ejecting ink by all the heads, wherein the image output unit includes: a printer controller reading separation data of an image from the separation data generator, setting a channel for each stacking layer in multilayer printing, wherein a 3D effect is set for a layer requiring a 3D effect, generating a 3D multilayer print command causing all the heads to eject ink when a multilayer-printed layer is set to a 3D effect, and transmitting the 3D multilayer print command to a printing device; and the printing device performing, when receiving the 3D multilayer print command, multilayer printing by ejecting ink by all the heads.

The printer controller may provide an option for setting whether to use the virtual channel O or the spot channels W, P, and V for the 3D effect and provide an option for automatically raising a position of a print head whenever each layer is stacked when the stack channel is set.

### ADVANTAGEOUS EFFECTS OF DISCLOSURE

By the multilayer inkjet printing system and method capable of producing a 3D effect according to the present disclosure, the stacking speed may be increased in multilayer printing for producing a 3D effect, and the visual effects may be enhanced and also the tactile senses may be stimulated through the 3D and stereoscopic outputs.

Also, in the case of using conductive ink to output a conductive pattern, when the film thickness varies, the conductivity thereof varies. According to the present disclosure, a product with a desired conductivity may be obtained by adjusting the stack thickness.

Also, according to the present disclosure, the multilayer inkjet printing time may be greatly reduced by increasing the stacking speed even without adding a head, and there may be no burden of equipment remodeling by utilizing an existing head without adding a head.

Also, according to the present disclosure, when it is necessary to produce an optimized image for providing a 3D effect, a 3D stereoscopic output may be implemented even with only two-dimensional (2D) images such as general pictures or illustrations.

### BRIEF DESCRIPTION OF DRAWINGS

FIG. 1 illustrates an example of a printing system to which the present disclosure is applied.
FIG. 2 illustrates a configuration of an embodiment of a multilayer inkjet printing system capable of producing a three-dimensional (3D) effect according to the present disclosure.
FIG. 3 is a block diagram illustrating a configuration of a more particular embodiment of a multilayer inkjet printing system capable of producing a 3D effect according to the present disclosure.
FIG. 4 illustrates an example of printer control software (S/W) (GUI) 352.
FIG. 5 illustrates an example of a user interface (Ul) screen for setting a color (e.g., CMYK, W, P, V, 3D effect) to be output in each layer when printing is performed by stacking ink on a print medium (material) located on a flatbed.
FIG. 6 illustrates an example of a UI screen after setting a layer in FIG. 5.
FIGS. 7 and 8 illustrate an example of a UI screen displayed when an option (configuration) in an ink and option management region 410 is clicked.
FIG. 9 illustrates an example of a layer structure in a case where a print image may be viewed on both sides when a print medium (material) is a transparent material.
FIG. 10 illustrates an example of a layer structure when an image is printed on an opaque material.
FIG. 11 illustrates an example of a spot channel setting method.
FIG. 12 illustrates an exemplary implementation of FIG. 4.
FIG. 13 illustrates an exemplary implementation of FIG. 5.
FIG. 14 illustrates an exemplary implementation of FIG. 6.
FIG. 15 illustrates setting an output position by dragging a moved image to drag an image such that an output position of an equipment flatbed and a position on a screen coincide with each other.
FIG. 16 illustrates manually inputting X and Y values through a UI screen of an output control management region 430, measuring a thickness of a material to be output, inputting the same into Z, and then setting a height.
FIG. 17A illustrates colors output in the respective layers according to the related art.
FIG. 17B illustrates a 3D effect based on an "overwrite (O)" channel according to an embodiment of the present disclosure.
FIG. 18 illustrates an example of a vacuum setting UI.
FIG. 19 illustrates an example of an ultraviolet (UV) lamp setting UI.
FIG. 20 is a flowchart illustrating an embodiment of a multilayer inkjet printing method capable of producing a 3D effect according to the present disclosure.

### BEST MODE

Hereinafter, example embodiments of the present disclosure will be described in detail with reference to the accompanying drawings. Since the embodiments described herein and the configurations illustrated in the drawings are merely example embodiments of the present disclosure and do not represent all of the concepts of the present disclosure, it will be understood that there may be various equivalents and modifications thereof.

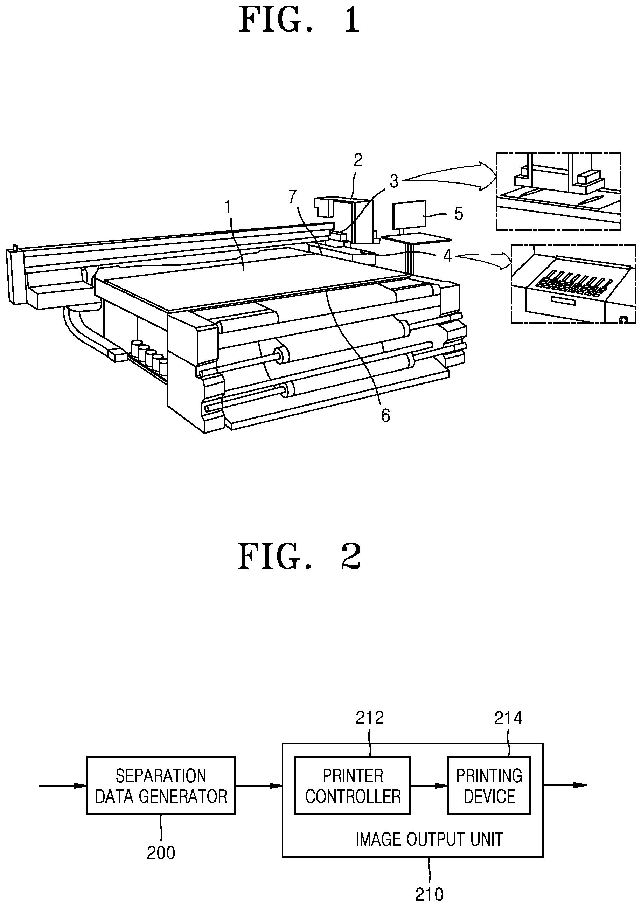

FIG. 1 illustrates an example of a printing system to which the present disclosure is applied. A reference numeral 1 denotes a flatbed, which is a printing bed for high-quality print output on various materials. Various materials may be fixed to the flatbed by using vacuum pressure. A reference numeral 2 denotes a nozzle, and a small dot output enables fine and high-resolution printing. A reference numeral 3 denotes a light emitting diode (LED) curing device, which may reduce the amount of heat generation to output a material vulnerable to heat and thus may be applied to various materials. A reference numeral 4 denotes a device that provides a head height setting function and a head collision preventing function through equipment maintenance and material thickness measurement. A reference numeral 5 denotes a processing device loaded with graphical user interface (GUI) software. A reference 6 denotes an optional roll-to-roll system, which may be used in various applications. A reference numeral 7 denotes an optional antistatic device that prevents the generation of static electricity that may affect printing.

FIG. 2 is a block diagram illustrating a configuration of an embodiment of a multilayer inkjet printing system capable of producing a three-dimensional (3D) effect according to the present disclosure, which may include a separation data generator 200 and an image output unit 210.

The separation data generator 200 may generate separation data by ripping an image file and may be implemented by using a raster image processor (RIP). In general, the RIP may refer to converting texts and images edited in the Post Script language into printable raster images. That is, it may refer to an interpreter that converts Post Script data such as fonts, sizes, positions, densities, colors, and sizes, positions, and shape of figures or images into raster images. For example, when the resolution of a printer is 1440x720 dpi, information that is 1440 pixels per inch in width and 720 pixels per inch in height may be converted into a bitmap file through a conversion process called ripping. Thus, the RIP may be an interpreter that converts information written in a computer to be recorded after being transmitted to an output device and may be regarded as a decoder that translates a post script when the post script is a secret code. A function of the RIP is to translate a post script, divide and separate each printable color component into four components C, M, Y, and K, and analyze and record the same as black and white raster information.

The image output unit 210 may read the separation data output from the separation data generator 200, convert the separation data into an instruction to have a multilayer (stack) effect, and output an image having a multilayer effect and may include a printer controller 212 and a printing device 214. That is, when receiving a 3D multilayer print command causing all heads to eject ink, all of the heads may eject ink to generate an output providing a 3D effect forming a stereoscopic effect. The printer controller 212 may read separation data of an image from the separation data generator 200 and set a channel for each stacking layer in multilayer printing. In this case, a 3D effect may be set for a layer requiring a 3D effect. When a multilayer-printed layer is set to a 3D effect, the printer controller 212 may generate a 3D multilayer print command causing all the heads to eject ink and transmit the 3D multilayer print command to the printing device 214. The printer controller 212 may be implemented through a GUI. The printer controller 212 may provide an option for setting whether to use a virtual channel ("O") or spot channels W, P, and V for the 3D effect and provide an option for automatically raising the position of a print head whenever each layer is stacked when the virtual channel is set to be used.

When receiving the 3D multilayer print command from the printer controller 212, the printing device 214 may perform multilayer printing by causing all of the heads to eject ink.

The channel may include four color channels C, M, Y, and K, three spot channels W, P, and V, and at least one virtual channel O. The spot channel may include a white channel W having a white color as a background color, a primer channel P adding a substance helping adhesion and solidification of ink, and a varnish channel V adding gloss to ink, and the virtual channel may include an overwrite channel O providing a 3D effect by forming a stereoscopic effect. When there is no overwrite channel O, the spot channels W, P, and V may be selected as a virtual channel producing a 3D effect.

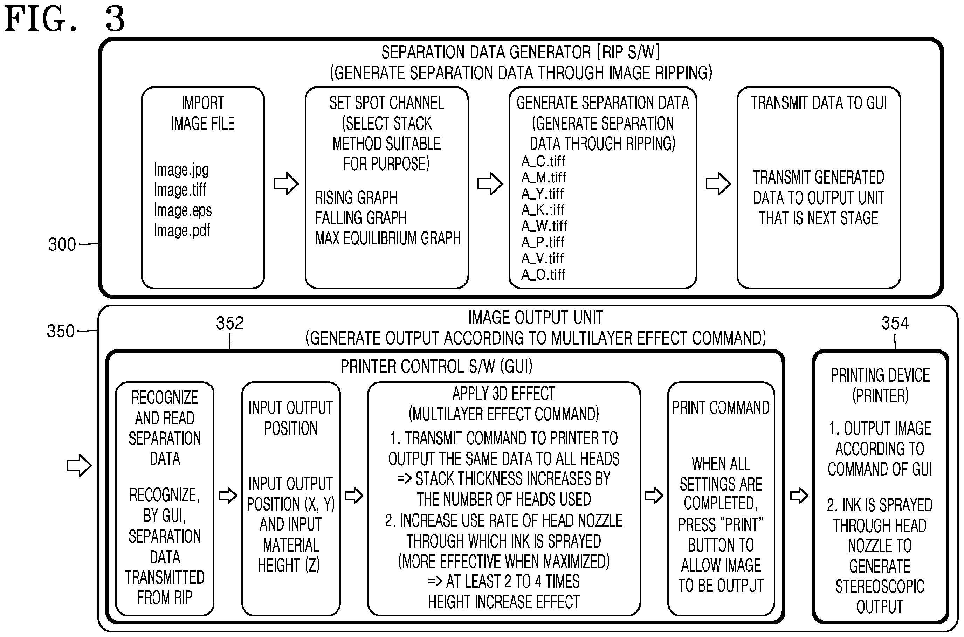

FIG. 3 is a block diagram illustrating a configuration of a more particular embodiment of a multilayer inkjet printing system capable of producing a 3D effect according to the present disclosure. The multilayer inkjet printing system capable of producing a 3D effect according to the present disclosure may include a separation data generator 300 and an image output unit 350.

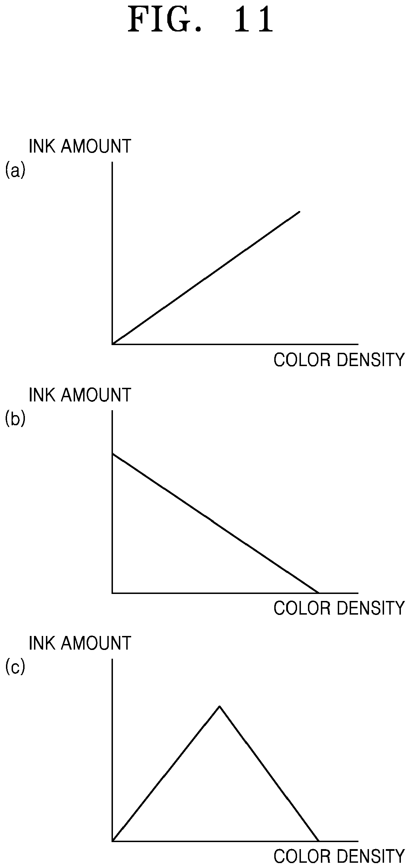

The separation data generator 300 may generate separation data through image ripping and may be implemented by using RIP software. The separation data generator 300 may import an image file (image.jpg, image.tiff, image.eps, image.pdf, etc.), set a spot channel, and select a stacking method suitable for a purpose. FIG. 11 illustrates an example of a spot channel setting method. In an embodiment of the present disclosure, the spot channel may be provided with a white channel, a primer channel, a varnish channel, and an overwrite (3D effect) channel. Referring to FIG. 11, the horizontal axis (X axis) represents the density of color and the vertical axis (Y axis) represents the amount of ink ejected onto a print medium or the height of stacked ink. FIG. 11 (a) is a rising graph illustrating that the amount of ejected ink increases and the stack height increases as the color density of an image increases. Contrary to FIG. 11 (a), FIG. 11 (b) is a falling graph illustrating that the amount of ejected ink increases and the stack height increases as the color density of an image decreases. FIG. 11 (c) illustrates that as in FIG. 11 (a), in a certain section, the amount of ejected ink increases and the stack height increases as the color density of an image increases and as in FIG. 11 (b), in a next section, the amount of ejected ink increases and the stack height increases as the color density of an image decreases.

When the spot channel is set, the separation data generator 300 may generate separation data. The separation data may be generated through ripping to analyze an image into each color component channel and a spot channel. For example, when an image file "A.tiff" is received as an input, a separation data file may be generated as A_C.tiff, A_M.tiff, A_Y.tiff, A_K.tiff, A_W.tiff, A_P.tiff, A_V.tiff, or A_O.tiff. That is, it may be generated as eight pieces of separation data including four color channels C, M, Y, and K, three spot channels W, P, and V, and one virtual channel O. The generated separation data may be transmitted to a GUI 352 of the image output unit 350.

The image output unit 350 may generate an output according to a 3D effect command and may include printer control software (GUI) 352 and an output device (printer) 354.

The printer control software (GUI) 352 may read and recognize the separation data, input position information of a flatbed to output an image to a print medium located on the flatbed, and input height (Z axis) information of a print medium (material). Then, a command for applying a 3D effect (multilayer effect) may be generated with reference to the position information and the height information. That is, a command may be transmitted to a printer to output the same data to all heads of the output device (printer) 354. Accordingly, as many layers as the number of heads used may be stacked to increase the thickness thereof. For example, when the 3D effect is set to be applied, ink may be ejected and stacked on all the color channels (CMYK) and the spot channels (White, Primer, Varnish) without color discrimination. Also, when the 3D effect is applied, the use rate of a head nozzle through which ink is sprayed may be increased. For example, when only 25% of the nozzle is normally used to avoid ink interference, 100% of the nozzle may be used when the 3D effect is applied. By way of this, the height thereof may be increased by 4 times or more. The printer control software (S/W) (GUI) 352 may apply the 3D effect. When all the settings are completed, a print button may be pressed to allow an image to be output. When a user presses the print button, a print command may be transmitted to the printer 354 that is a printing device.

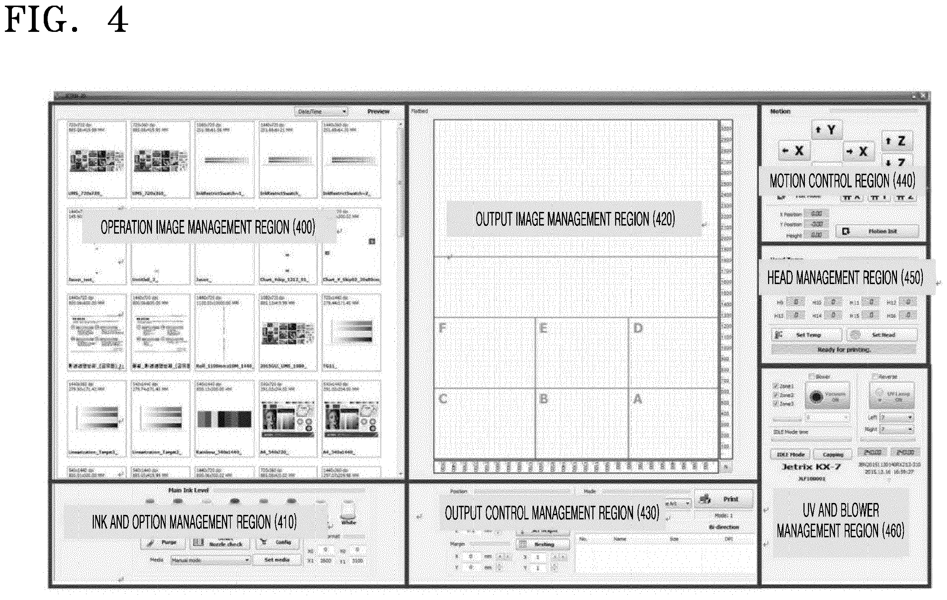

FIG. 4 illustrates an example of a GUI screen provided by the printer control software (GUI) 352. Referring to FIG. 4, the GUI screen may include seven regions including an operation image management region 400, an ink and option management region 410, an output image management region 420, an output control management region 430, a motion control region 440, a head management region 450, and an ultraviolet (UV) and blower control region 460.

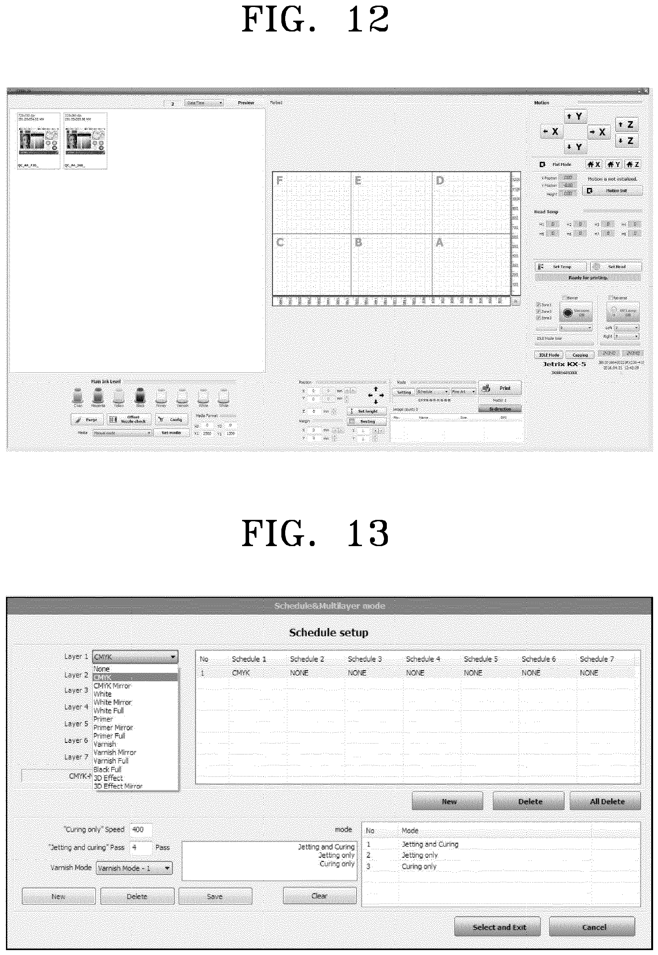

The operation image management region 400 may be a user interface region for managing a user image and may include files to be printed. FIG. 12 illustrates an exemplary implementation of FIG. 4.

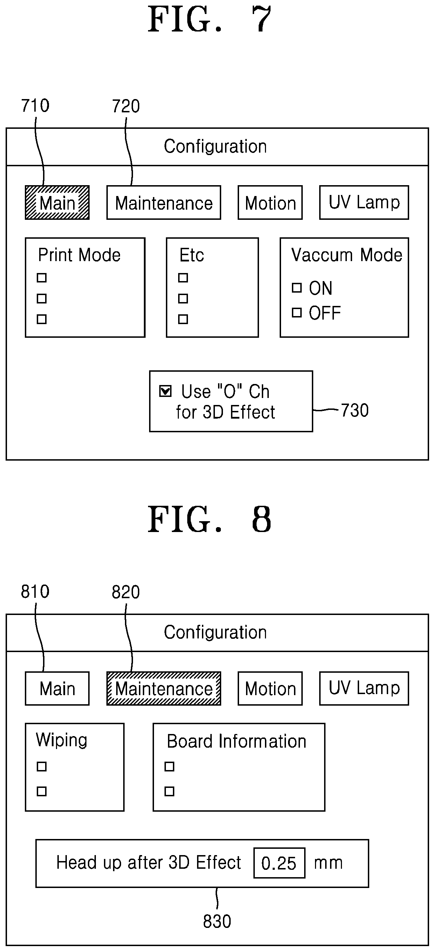

The ink and option management region 410 may be a user interface region for processing main ink control/state, offset for each head, option (configuration), or the like. The ink and option management region 410 may provide an option for determining whether to supply ink, determining whether to use the "O" channel for the 3D effect, and raising the head after the 3D effect according to stacking. FIGS. 7 and 8 illustrate an example of a UI screen displayed when an option (configuration) in the ink and option management region 410 is clicked. Referring to FIG. 7, when a main tab 710 is selected, the RIP software may provide a menu 730 for setting whether to use the "O" channel or the spot channels W, P, and V for the 3D effect. Referring to FIG. 8, when a maintenance tab 820 is selected, an option 830 for automatically raising the position of the print head in stacking may be set. For example, whenever each layer is stacked for the 3D effect, the head position may be raised by 0.25 mm.

The output image management region 420 may be a user interface region for managing the position of an image to be output.

The output control management region 430 may be a user interface region for managing an output mode. The output control management region 430 may provide a user interface screen for setting the position of a print material on the flatbed and provide a user interface screen for setting a layer in printing on a print material.

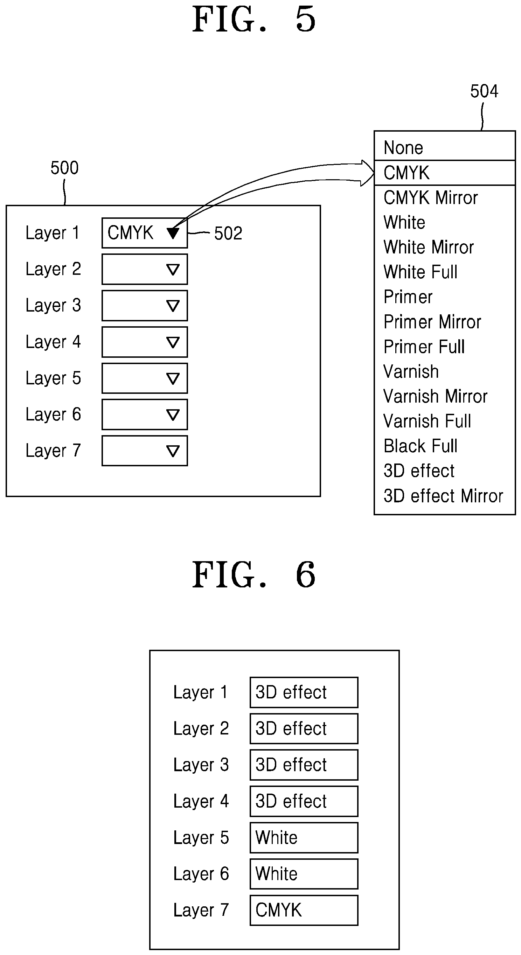

FIG. 5 illustrates an example of a user interface (Ul) screen for setting a color (e.g., CMYK, W, P, V, 3D effect) to be output in each layer when printing is performed by stacking ink on a print medium (material) located on a flatbed. FIG. 6 illustrates an example of a UI screen after setting a layer in FIG. 5. Referring to FIG. 5, when a relevant menu is clicked for each layer, a UI screen for setting a detailed item as in a reference number 504 may be displayed. It may be selected whether to set a layer to CMYK, whether to set, before color printing, a spot channel such as a white channel W having a white color as a background color, a primer channel P adding a substance helping adhesion and solidification of ink, or a varnish channel V adding gloss to ink, and whether to apply a 3D effect for a stereoscopic effect. Referring to

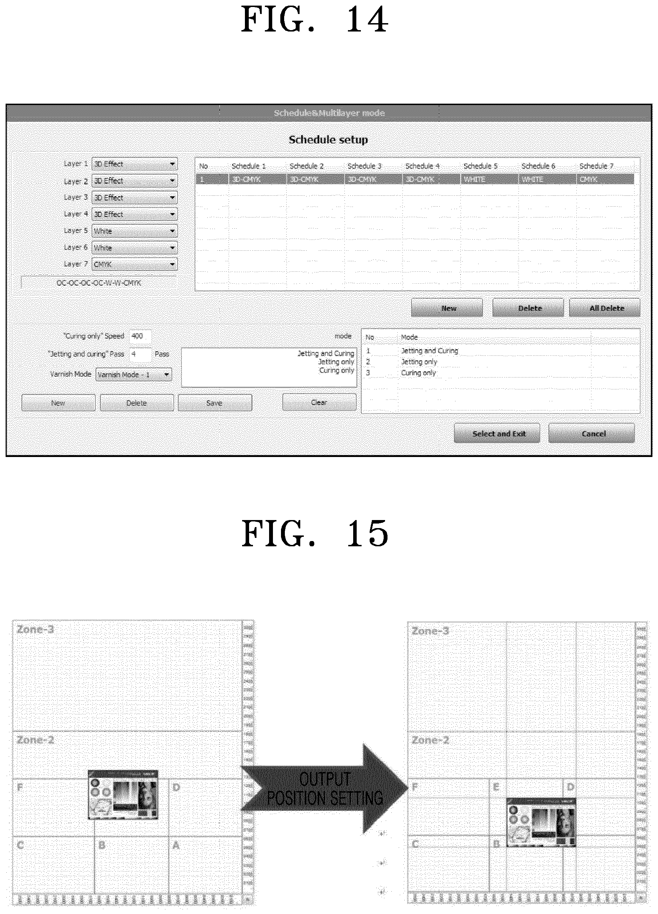

FIG. 6, layers 1 to 4 may be stacked for the 3D effect, a white background color may be printed in layers 5 and 6, and a color of image may be printed in CMYK in a layer 7 that is a top layer. FIG. 13 illustrates an exemplary implementation of FIG. 5, and FIG. 14 illustrates an exemplary implementation of FIG. 6.

The motion control region 440 may be a user interface region for manually controlling a motion installed in the equipment and may include a user interface (Ul) for adjusting the position of a head box. The head management region 450 may be a user interface region for managing a head such as head temperature, voltage, or pulse.

The UV and blower control region 460 may be a user interface region for managing UV and a blower.

Meanwhile, when receiving a print command, the printer 354 (as an output device) may print an image on a material installed on the flatbed according to the condition set in the GUI 352. In this case, ink may be sprayed through the head nozzle to generate a stereoscopic output. For example, the output device may be an inkjet printer, and the inkjet printer may eject fine droplets of print ink at desired positions on a print medium to print an image of a certain color on the surface of the print medium.

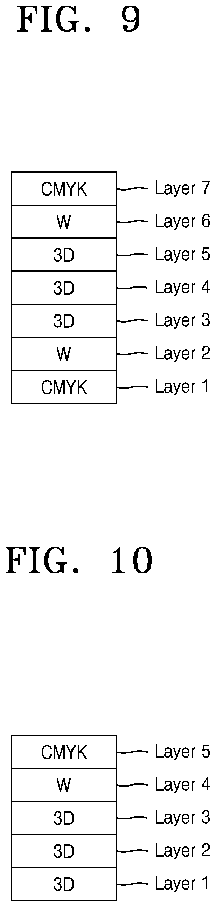

FIG. 9 illustrates an example of a layer structure in a case where a print image may be viewed on both sides when a print medium (material) is a transparent material. CMYK may be printed on Layer 1 of a transparent material and white may be printed thereon (Layer 2). Thereafter, in order to provide a 3D effect, printing may be performed to apply a 3D effect onto three layers (Layer 3, 4, 5), white may be printed thereon (Layer 6), and then CMYK may be printed (Layer 7).

FIG. 10 illustrates an example of a layer structure when an image is printed on an opaque material. First, in order to provide a 3D effect to layers 1, 2, and 3, printing may be performed to apply a 3D effect, white may be printed thereon (Layer 4), and then CMYK may be printed (Layer 5).

An embodiment of a multilayer inkjet printing method capable of producing a 3D effect according to the present disclosure will be described below.

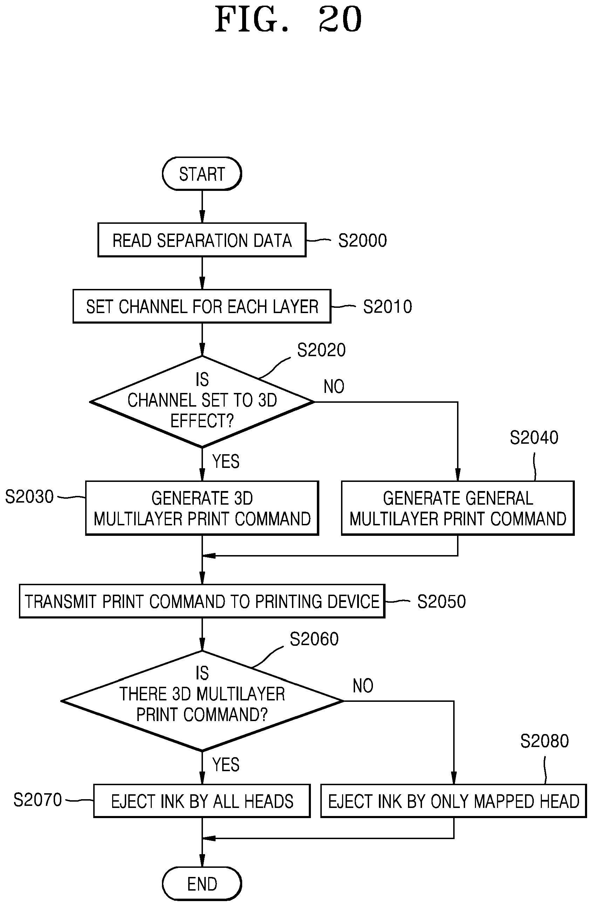

FIG. 20 is a flowchart illustrating an embodiment of a multilayer inkjet printing method capable of producing a 3D effect according to the present disclosure. First, separation data of an image may be read from an RIP that is an embodiment of the separation data generator 200 (operation S2000). When multilayer printing is performed with respect to the read separation data, a channel is set for each stacking layer (operation S2010). When a channel is set for each layer, it may be checked whether there is a layer requiring a 3D effect (operation S2020), and a 3D effect may be set for a layer requiring a 3D effect to generate a 3D multilayer print command causing all heads to eject ink (operation S2030). For the layers set as a general color channel and a spot channel, a general multilayer print command may be generated (operation S2040).

The 3D multilayer print command and the general multilayer print command may be transmitted to a printing device (printer) (operation S2050). When receiving the 3D multilayer print command, the printer may perform multilayer printing by causing all the heads to eject ink (operation S2070). In response to the general multilayer print command, only the mapped head may eject ink to perform printing (step S2080). Herein, the channel may include four color channels C, M, Y, and K, three spot channels W, P, and V, and one virtual channel O, the spot channel may include a white channel W having a white color as a background color, a primer channel P adding a substance helping adhesion and solidification of ink, and a varnish channel V adding gloss to ink, and the virtual channel may include an overwrite channel O providing a 3D effect by forming a stereoscopic effect. When necessary, the spot channels W, P, and V may be used as a channel providing a 3D effect.

Then, through a GUI, the printer controller 212 may provide an option for setting whether to use a virtual channel ("O") for the 3D effect and provide an option for automatically raising the position of a print head whenever each layer is stacked when the virtual channel is set to be used.

Then, through the GUI, while a user interface screen including at least an operation image management region and an output image management region is provided, at least one print target image may be displayed in the operation image management region, and when an image in the operation image management region is selected and located in the output image management region, a user interface screen may be provided to input an output position and a thickness of a material to be output or set an output position by dragging the image such that an output position of an equipment flatbed and a position on a screen coincide with each other.

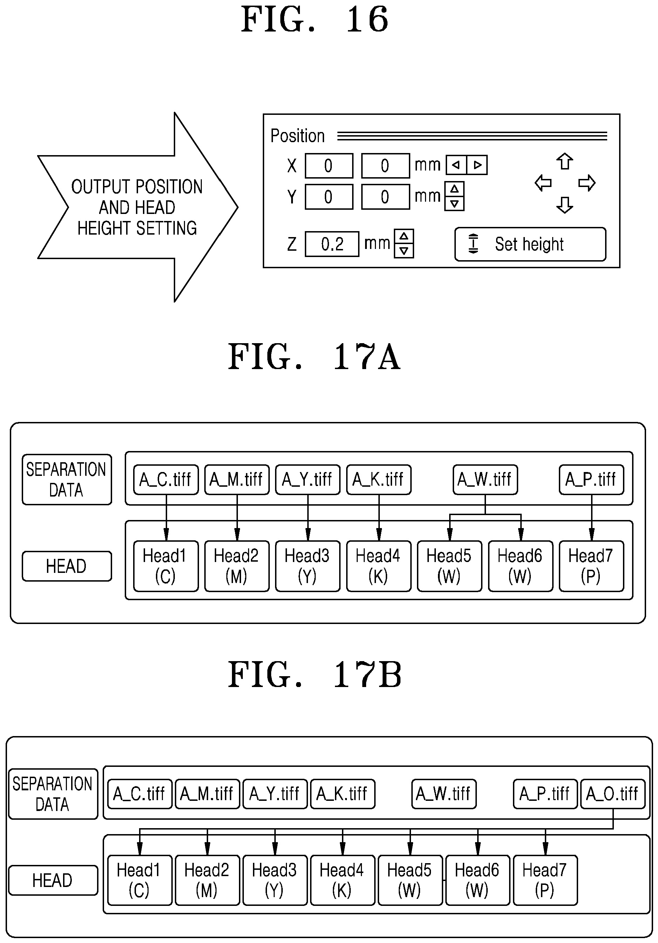

The 3D multilayer printing through the GUI will be described in more detail. An image to be output may be automatically recognized and displayed in the operation image management region 400 of FIG. 4. The displayed image may be selected and a drag & drop operation or a double click operation may be performed by a left button of a mouse for the selected image into the output image management region. When the image in the operation image management region 400 is moved to the output image management region 420, the image may be dragged to set the output position such that the output position of the equipment flatbed and the position on the screen may coincide with each other as illustrated in FIG. 15. Alternatively, as illustrated in FIG. 16, the X and Y values may be manually input through a UI screen of the output control management region 430, the thickness of a material to be output may be measured and input to Z, and then the height thereof may be set.

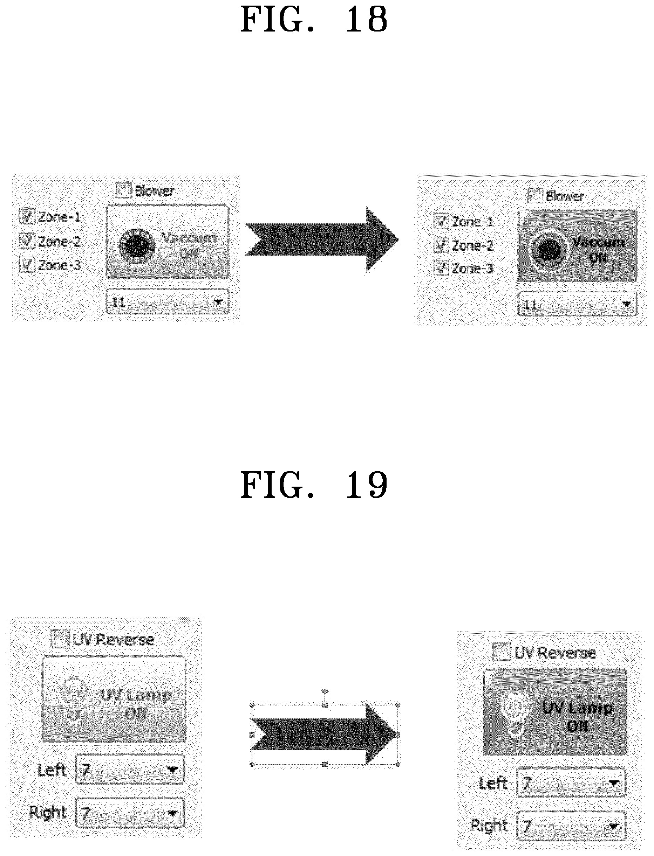

When the output position of a printed matter is set in a print medium (material), an output mode may be set. The output mode is to set the color (CMYK, W, P, V, 3D effect) to be output to each layer as illustrated in FIGS. 5, 6, 13, and 14. As illustrated in FIG. 17A, in the related art, a separate print head is matched to each separation data to perform printing. For example, separation data A_C.tiff on Cyan Color is matched to Head1 (C), separation data A_M.tiff on Magenta Color is matched to Head2 (M), separation data A_Y.tiff on Yellow Color is matched to Head3 (Y), separation data A_K.tiff on Black Color is matched to Head4 (K), separation data A_W.tiff on White Spot is matched to Head5 (W) and Head6 (W), and separation data A_P.tiff on Primer Spot is matched to Head7 (P). In the case of performing multilayer printing in such a manner through matching, it takes a long time to print. However, when the 3D effect according to the present disclosure is applied, when multilayer printing is performed by selecting A_O.tiff as illustrated in FIG. 17B, since all heads (Head 1 to Head 7) may be used, the stacking time may be further shortened. That is, when the separation data A_O.tiff for the 3D effect is applied, ink may be ejected through all the heads corresponding to all the color channels (CMYK) and the spot channels (White, Primer, Varnish) without color discrimination in the printer and the stack thickness may be increased by the number of heads used. Also, when the 3D effect is applied, the use rate of head nozzles through which ink is sprayed may be increased. For example, when only 25% of the nozzle is normally used to avoid ink interference, 100% of the nozzle may be used for stacking without being subject to the ink interference when the 3D effect is applied. Accordingly, the height thereof may be increased by 4 times or more. When a color to be output is set for each layer, a vacuum setting may be performed as illustrated in FIG. 18. The reason for setting Vacuum ON is to fix a print material at an accurate position, protect a head, and output a precise image. Also, as illustrated in FIG. 19, a button may be used to set a UV lamp. Then, a print button may be pressed to start printing. As above, when the printer controller (GUI) 212 receives the ripping data converted by the separation data generator (RIP) 200 and gives a command to the printer, the raster is scattered at a designated position according to the command.

Meanwhile, according to the present disclosure, when conductive ink is used to output a conductive pattern, the stack thickness may be adjusted through the printer controller 212. When the film thickness varies, the conductivity varies. Thus, a product with a desired conductivity may be obtained by controlling the stack thickness. Also, an optimized image for providing a 3D effect may be produced by performing a 3D stereoscopic output even with only 2D images such as general pictures or illustrations.

Although the present disclosure has been described with reference to the embodiments illustrated in the drawings, this is merely an example and those of ordinary skill in the art will understand that various modifications and other equivalent embodiments may be derived therefrom. Thus, the spirit and scope of the present disclosure should be defined by the appended claims.

### INDUSTRIAL APPLICABILITY

The present disclosure may be used in multilayer printing for producing a 3D effect, and a product with a desired conductivity may be obtained by adjusting the stack thickness.

Also, according to the present disclosure, the time for multilayer inkjet printing may be greatly reduced by increasing the stacking speed even without adding a head, and there may be no burden of equipment remodeling by utilizing an existing head without adding a head. Also, when it is necessary to produce an optimized image for providing a 3D effect, a 3D stereoscopic output may be implemented even with only 2D images such as general pictures or illustrations.

## Claims

1. A multilayer inkjet printing method capable of producing a three-dimensional (3D) effect through multilayer printing, the multilayer inkjet printing method comprising:
reading separation data of an image from a raster image processor (RIP);
setting a channel for each stacking layer in multilayer printing, wherein a 3D effect is set for a layer requiring a 3D effect;
generating a 3D multilayer print command causing all heads to eject ink when a print target layer is set to a 3D effect and transmitting the 3D multilayer print command to a printing device; and
performing, by using the printing device, multilayer printing by ejecting ink by all the heads when receiving the 3D multilayer print command,
wherein the channel comprises at least four color channels C, M, Y, and K and at least one channel for providing the 3D effect by forming a stereoscopic effect.

2. The multilayer inkjet printing method of claim 1, wherein the channel comprises four color channels C, M, Y, and K, three spot channels W, P, and V, and at least one virtual channel O,
the spot channel comprises a white channel W having a white color as a background color, a primer channel P adding a substance helping adhesion and solidification of ink, and a varnish channel V adding gloss to ink, and
the at least one virtual channel comprises an overwrite channel O providing a 3D effect by forming a stereoscopic effect.

3. The multilayer inkjet printing method of claim 2, wherein the spot channels W, P, and V are also used as a channel providing a 3D effect.

4. The multilayer inkjet printing method of claim 3, further comprising providing an option for setting whether to use the virtual channel O or the spot channels W, P, and V for the 3D effect and providing an option for automatically raising a position of a print head whenever each layer is stacked when the channel is set.

5. The multilayer inkjet printing method of claim 1, further comprising:
providing a user interface screen including at least an operation image management region and an output image management region;
displaying at least one print target image in the operation image management region; and
when an image in the operation image management region is selected and located in the output image management region, providing a user interface screen for inputting an output position and a thickness of a material to be output or setting an output position by dragging the image such that an output position of an equipment flatbed and a position on a screen coincide with each other.

6. A multilayer inkjet printing system capable of producing a three-dimensional (3D) effect, the multilayer inkjet printing system comprising:
a separation data generator generating separation data by performing image ripping on an input image file; and
an image output unit generating, when receiving a 3D multilayer print command causing all heads to eject ink, an output providing a 3D effect forming a stereoscopic effect by ejecting ink by all the heads,
wherein the image output unit includes:
a printer controller reading separation data of an image from the separation data generator, setting a channel for each stacking layer in multilayer printing, wherein a 3D effect is set for a layer requiring a 3D effect, generating a 3D multilayer print command causing all the heads to eject ink when a multilayer-printed layer is set to a 3D effect, and transmitting the 3D multilayer print command to a printing device; and
the printing device performs, when receiving the 3D multilayer print command, multilayer printing by ejecting ink by all the heads.

7. The multilayer inkjet printing system of claim 6, wherein the channel comprises four color channels C, M, Y, and K, three spot channels W, P, and V, and at least one virtual channel O,
the spot channel comprises a white channel W having a white color as a background color, a primer channel P adding a substance helping adhesion and solidification of ink, and a varnish channel V adding gloss to ink, and
the at least one virtual channel comprises an overwrite channel O providing a 3D effect by forming a stereoscopic effect.

8. The multilayer inkjet printing system of claim 7, wherein the spot channels W, P, and V are used as a channel providing a 3D effect.

9. The multilayer inkjet printing system of claim 8, wherein the printer controller provides an option for setting whether to use the virtual channel O or the spot channels W, P, and V for the 3D effect and provides an option for automatically raising a position of a print head whenever each layer is stacked when the channel is set.
